# EUROPEAN PATENT SPECIFICATION

(11) **EP 4 286 471 B1**
(45) Date of publication and mention of the grant of the patent: **12.11.2025**
(21) Application number: 23382529.8
(22) Date of filing: 01.06.2023
(51) Int. Cl.: C08L 7/00

(54) **RUBBER COMPOSITION WITH ELASTOCALORIC EFFECT**
KAUTSCHUKZUSAMMENSETZUNG MIT ELASTOKALORISCHER WIRKUNG
COMPOSITION DE CAOUTCHOUC À EFFET ÉLASTOCALORIQUE

(30) Priority: 02.06.2022 ES 202230479
(43) Date of publication of application: 06.12.2023
(73) Proprietor: Universitat Politècnica De Catalunya, 08034 Barcelona (ES)
(72) Inventor: CANDAU, Nicolas, 08019 Barcelona (ES); MASPOCH RULDUÀ, Mª Lluisa, 08019 Barcelona (ES)
(74) Representative: Torner, Juncosa I Associats, SL

(56) References cited:
- CANDAU NICOLAS ET AL: "Elastocaloric effect in vulcanized natural rubber and natural/wastes rubber blends", POLYMER, vol. 236, 29 October 2021 (2021-10-29), AMSTERDAM, NL, pages 124309, XP093090384, ISSN: 0032-3861, DOI: 10.1016/j.polymer.2021.124309
- MOHD SANI NOOR FAEZAH ET AL: "Intrinsic self-healing rubber: A review and perspective of material and reinforcement", POLYMER TESTING, ELSEVIER, AMSTERDAM, NL, vol. 111, 27 April 2022 (2022-04-27), XP087060821, ISSN: 0142-9418, [retrieved on 20220427], DOI: 10.1016/J.POLYMERTESTING.2022.107598

## Description

### Technical Field

The present invention relates to a rubber-based composition having elastocaloric properties. It also relates to the method for obtaining the composition and to the use thereof in different applications.

### State of the Art

Sustainable energy and material recycling are two fundamental issues that seek to contribute to reducing the environmental impact of energy and material production. Sustainable energy is developed in response to the growing demand to regulate the surface temperature of the planet without increasing greenhouse gas emissions. Caloric materials have promising properties which can contribute to achieving this objective. These materials are solids that can exchange heat from the environment, including cooling and refrigeration applications. However, conventional caloric materials use rare earth-based materials, which are not only expensive, but also prone to supply shortages.

To overcome this problem, there is a need to conduct research on innovative solutions that allow efficient commercial application, while addressing current economic and ecological concerns at the same time.

The scientific article by Candau et al., Polymer 236 (2021) 124309, discloses vulcanised natural rubber and rubber waste blends, as well as the elastocaloric properties of these blends. In particular, this document discloses compositions having 20% by weight of particles of rubber waste (consisting of ground tyre rubber) in a natural rubber matrix which maintains and even slightly improves heat exchange.

There are also several patent applications in the literature which describe natural rubber and recycled rubber blends for various applications, without mentioning the elastocaloric effect.

For example, EP2476657 A1 describes compositions and methods for obtaining an asphalt blend comprising an elasticity-increasing agent which can be, among others, a natural rubber powder and recycled rubber powder blend.

Furthermore, CA2104344A1 describes plastic particles having a sulfonated layer. These plastic particles can be of natural or recycled rubber, and can even be embedded in a cellulose matrix, for example.

Other documents also describe obtaining various composites based on rubber and other additives, although the elastocaloric effect associated with said materials is not mentioned either.

For example, WO2020247663A describes a method for preparing a composite from a solid elastomer, which can be natural rubber, and it can contain filler materials such as nanocellulose, among others.

The present invention describes a composition that is an alternative to the compositions known and described in the state of the art with improved properties, specifically in relation to the elastocaloric effect.

### Brief Description of the Invention

In a first aspect, the present invention describes a composition comprising a natural rubber (NR), rubber waste, and cellulose nanocrystal (CNC) blend.

In a second aspect, the present invention describes a method for obtaining a composition which comprises: a) masticating natural rubber in a mixer; b) adding rubber waste and cellulose nanocrystal powder to the masticated natural rubber, obtaining a first blend; c) adding a vulcanising agent to the first blend obtained in step b), obtaining a second blend; and d) vulcanising the second blend obtained in step c).

In a third aspect, the present invention describes the use of the composition referred to herein for heating or cooling buildings.

Other features of the invention will become evident in the following detailed description.

### Brief Description of the Figures

FIG. 1 shows the torque as a function of time for NR/GTR10, NR/GTR20, NR/GTR33, and NR/GTR40 blends (10, 20, 33, and 40 refer to the % by weight of GTR in the blend). Data on the vertical axis has been shifted upwards with an increase of 10 Nm for the sake of clarity.
FIG. 2 shows the torque as a function of time for NR, NR/CNC1, NR/CNC3, and NR/CNC5 blends (1, 3, and 5 refer to the % by weight of CNC in the blend). Data on the vertical axis has been shifted upwards with an increase of 10 Nm for the sake of clarity.
FIG. 3 shows the torque as a function of time for NR/GTR40, NR/GTR40/CNC1, NR/GTR40/CNC5, and NR/GTR40/CNC10 blends (GTR40 refers to the % of GTR in the blend, whereas CNC1, 5 and 10 refer to the % by weight of CNC in the blend). Data on the vertical axis has been shifted upwards with an increase of 10 Nm for the sake of clarity.
FIG. 4 shows the temperature on the surface of a vulcanised natural rubber during a traction cycle as a function of deformation (%) and as a function of time (seconds).
FIG. 5 shows the increase of the temperature on the surface of the sample during the simple loading of an NR, NR/GTR10, NR/GTR20, NR/GTR33, and NR/GTR40.
FIG. 6 shows the thermal diffusion time after loading and unloading during the cyclical test of an NR, NR/GTR40, NR/GTR40/CNC1, NR/GTR40/CNC5, and NR/GTR40/CNC10.
FIG. 7 shows the changes in temperature measured after loading, unloading, the temperature span, and the diffusion time after loading and after unloading as a function of the weight fraction of the CNC.
FIG. 8 shows the increase of the temperature on the surface of the sample during the sole loading of an NR, NR/GTR33, NR/GTR33/CNC1, NR/GTR33/CNC5, and NR/GTR33/CNC10.
FIG. 9 shows the thermal diffusion time after loading and unloading during the cyclical test of an NR, NR/GTR33, NR/GTR33/CNC1, NR/GTR33/CNC5, and NR/GTR33/CNC10.
FIG. 10 shows the temperature span on the surface of the sample during the cyclic loading of an NR, NR/GTR40, NR/GTR40/CNC1, NR/GTR40/CNC5, and NR/GTR40/CNC10.
FIG. 11 shows the increase of the temperature on the surface of the sample during the sole loading of an NR, NR/GTR40, NR/GTR40/CNC1, NR/GTR40/CNC5, and NR/GTR40/CNC10.

### Detailed Description of the Invention

The composition according to the present invention is defined as described in the present description.

Unless otherwise indicated, all the percentages relative to the content of an element or to a set of elements refer to percentage by weight with respect to the total weight of the composition.

It will also be understood that the extreme values of any offered range of values may not be optimal and may require adaptations of the invention so that said extreme values are applicable, said adaptations being within the reach of a person skilled in the art.

The composition according to the present invention comprises a natural rubber, rubber waste, and cellulose nanocrystal blend, wherein the rubber waste is ground tyre rubber; and the natural rubber is in an amount of between 40% and 70% by weight with respect to the total composition, the rubber waste is in an amount of between 15% and 45% by weight with respect to the total composition and the cellulose nanocrystals are in an amount of between 0.1% and 20% by weight with respect to the total composition.

The ground tyre rubber, according to the present invention, preferably comprises a natural rubber, styrene-butadiene rubber, and carbon black blend.

Preferably, the natural rubber in the ground tyre rubber is in an amount of between 30% and 60% by weight with respect to the total ground tyre rubber by weight, preferably between 35% and 55%.

Preferably, the styrene-butadiene rubber in the ground tyre rubber is in an amount of between 1% and 15% by weight with respect to the total ground tyre rubber by weight, preferably between 5% and 10%.

Preferably, the carbon black in the ground tyre rubber is in an amount of between 30% and 60% by weight with respect to the total ground tyre rubber by weight, preferably between 35% and 55%.

Furthermore, the composition according to the present invention may further comprise hydroxylamine.

Preferably, the hydroxylamine is in an amount of between 0.01% and 0.5% by weight with respect to the total weight of the composition, preferably between 0.05% and 0.25%.

The natural rubber of the composition preferably has a Mooney viscosity at 100°C of between 40 and 80, preferably between 45 and 70.

Furthermore, the natural rubber present in the composition according to the present invention is preferably in an amount of between 40% and 70% by weight with respect to the total composition, preferably between 45% and 65%.

The rubber waste present in the composition according to the present invention is preferably in an amount of between 15% and 45% by weight with respect to the total composition, preferably between 20% and 40%.

The cellulose nanocrystals present in the composition according to the present invention are preferably in an amount of between 0.1% and 20% by weight with respect to the total weight of the composition, preferably between 1% and 15%.

The cellulose nanocrystals preferably comprise cellulose sulphate sodium salt.

The cellulose nanocrystals, also referred to as nanocellulose, are cellulose-derived nanomaterials. Specifically, they are rigid, rod-shaped particles formed by segments of cellulose chain in an almost perfect crystalline structure.

The present invention also describes a method for obtaining a composition which comprises the following steps: a) masticating natural rubber in a mixer; b) adding rubber waste and cellulose nanocrystal powder to the masticated natural rubber, obtaining a first blend; c) adding a vulcanising agent to the first blend obtained in step b), obtaining a second blend; d) vulcanising the second blend obtained in step c); wherein step a) is preferably performed at a temperature of between 70°C and 130°C.

Furthermore, the masticating step a) is preferably performed for a time comprised between 1 and 10 minutes; preferably under rotation of between 10 and 60 rpm, preferably between 20 and 50 rpm, preferably 40 rpm.

The step of adding rubber waste and cellulose nanocrystal powder to the masticated natural rubber b) is preferably performed for a time comprised between 1 and 10 minutes; and step c) of adding a vulcanising agent to the first blend obtained in step b) is preferably performed for a time comprised between 1 and 10 minutes.

Step d) of vulcanising the second blend obtained in step c) is preferably performed at a temperature of between 150°C and 200°C. This step is performed at a high pressure, greater than atmospheric pressure, preferably between 2 and 6 MPa. Preferably, the vulcanising agent is dicumyl peroxide. Other alternatives can be sulphur.

Generally, the vulcanising agent is added in step d) in an amount of between 0.5% and 3% by weight with respect to the total weight of the natural rubber described in step a).

The present invention also describes the use of the composition herein described for heating or cooling buildings, utilising the elastocaloric properties of the composition.

### Examples

### Example 1: Preparation of natural rubber (NR)

The natural rubber (NR) of this study is SMR (Standard Malaysian Rubber) CV60 (Mooney viscosity ML 1+4, 100°C: 55-60) provided by the company Akrochem (USA) with 0.15% by weight of hydroxylamine added in the latex stage to prevent the raw rubber from hardening while being stored.

### Example 2: Preparation of ground tyre rubber (GTR)

Ground tyre rubber (GTR) was provided by the company J. Allock & Sons (United Kingdom) using the transformation of the tyre polish into finer rubber crumbs by means of a controlled cryo-milling. The GTR is made up of 55% by weight of rubber (85% by weight of natural rubber (NR) and 15% by weight of styrene butadiene rubber (SBR) and 45% by weight of carbon black. GTR crumbs are free of contaminants such as fabrics, metal, and road grime. GTR particles were first sieved with a shaking sieve (Analysette 3, Germany) with a 120 mesh (measurement <125 µm). Before processing, GTR particles were dried overnight in a vacuum oven (Vaciotem-TV, J.P. SELECTA^{®}, Spain) to prevent moisture absorption, on a silica gel at 70°C in order to remove any moisture.

### Example 3: Preparation of cellulose nanocrystals (CNCs)

Cellulose nanocrystals (CNCs) are a white-coloured dry solid powder provided by CelluForce NCCTM. Its chemical name is cellulose sulphate sodium salt (NaCS) obtained by means of the sulphation method. The CNCs have a density of 0.7 g.mol-1. The CNCs were stored at room temperature in a cool, dry, and ventilated place before use.

### Example 4: Preparation of natural rubber (NR)

The natural rubber was masticated inside the chamber of an internal mixer (Brabender Plastic-Corder W50EHT, Brabender GmbH & Co., Germany) at a temperature of 100°C for 5 minutes and at a rotational speed of 40 rpm. After masticating for 10 minutes, 1.5% by weight of dicumyl peroxide (DCP) was added, and mixing continued for 5 minutes. During the blending stage in the internal mixer (Brabender), torque was measured as a function of mixing time using the WinMix Brabender Mixer software.

### Example 5: Preparation of vulcanised natural rubber (vulcanised NR)

The blend containing NR and DCP was hot vulcanised according to the optimal time estimated at 170°C and 4 MPa. To perform the traction tests, dogbone-shaped specimens that were 1 mm thick, 4 mm wide, and 15 mm long were extracted from the hot moulded sheets by means of die-cutting with a specimen preparation punching machine (CEAST).

### Example 6: Preparation of natural rubber/ground tyre rubber (NR/GTR) blends

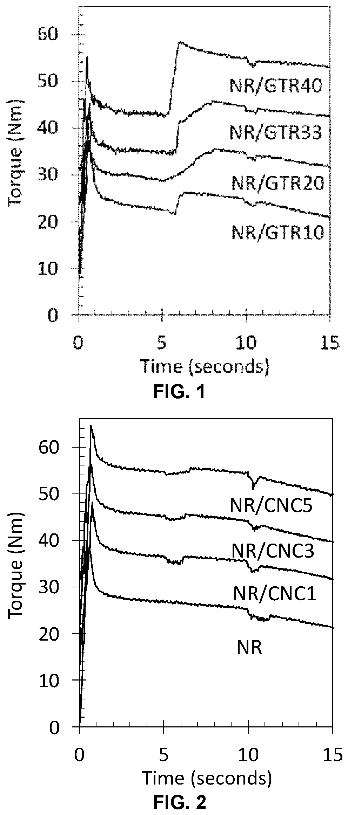

The natural rubber was masticated inside the chamber of an internal mixer (Brabender Plastic-Corder W50EHT, Brabender GmbH & Co., Germany) at a temperature of 100°C for 5 minutes and at a rotational speed of 40 rpm. After masticating for 5 minutes, GTR particles were added in a content varying from 10 to 40% by weight. After another 5 minutes, the vulcanising agent dicumyl peroxide (DCP) (1.5% by weight of the NR fraction) was added and mixed for 5 minutes. During each blending stage in the internal mixer (Brabender), torque was measured as a function of mixing time using the WinMix Brabender Mixer software, as shown in FIG. 1.

### Example 7: Preparation of vulcanised natural rubber/ground tyre rubber (vulcanised NR/GTR) blends

The blend containing NR, GTR, and DCP was vulcanised according to the optimal time estimated at 170°C under 4 MPa. To perform the traction test, dogbone-shaped specimens of 1 mm thick, 4 mm wide, and 15 mm long were extracted from hot moulded sheets by means of die-cutting with a specimen preparation punching machine (CEAST).

### Example 8: Preparation of natural rubber/cellulose nanocrystal (NR/CNC) blends

The natural rubber was masticated inside the chamber of an internal mixer (Brabender Plastic-Corder W50EHT, Brabender GmbH & Co., Germany) at a temperature of 100°C for 5 minutes and at a rotational speed of 40 rpm. After masticatng for 5 minutes, CNC powder was added in a content varying from 1 to 10% by weight. After another 5 minutes, the vulcanising agent dicumyl peroxide (DCP) (1.5% by weight of the NR fraction) was added and mixed for 5 minutes. During each blending stage in the internal mixer (Brabender), torque was measured as a function of mixing time using the WinMix Brabender Mixer software, as shown in FIG. 2.

### Example 9: Preparation of vulcanised natural rubber/rubber waste (vulcanised NR/CNC) blends

The blend containing NR, CNCs, and DCP prepared according to the method explained in Example 7 was then vulcanised according to the optimal time estimated at 170°C under 4 MPa, following the method described in Example 5.

### Example 10: Preparation of natural rubber, ground tyre rubber, and cellulose nanocrystal (NR/GTR/CNC) blends

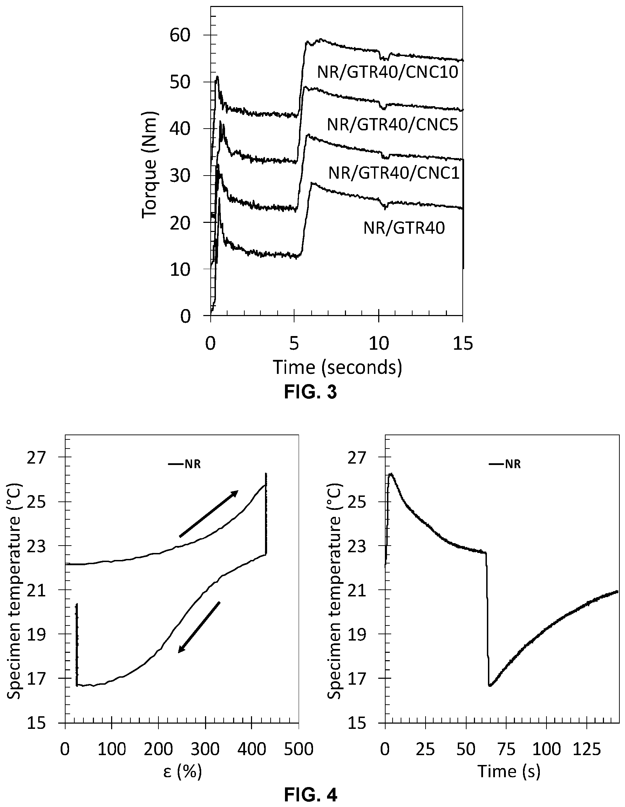

The natural rubber was masticated inside the chamber of an internal mixer (Brabender Plastic-Corder W50EHT, Brabender GmbH & Co., Germany) at a temperature of 100°C for 5 minutes and at a rotational speed of 40 rpm. After masticating for 5 minutes, GTR particles and CNC powder were added in a content varying from 10 to 40% by weight and from 1 to 10% by weight, respectively. After another 5 minutes, the vulcanising agent dicumyl peroxide (DCP) (1.5% by weight of the NR fraction) was added and mixed for 5 minutes. During each blending stage in the internal mixer (Brabender), torque was measured as a function of mixing time using the WinMix Brabender Mixer software, as shown in FIG. 3.

### Example 11: Preparation of vulcanised natural rubber/ground tyre rubber/cellulose nanocrystal (vulcanised NR/GTR/CNC) blends

The blend containing NR, GTR, CNCs, and DCP prepared according to the method explained in Example 10 was then vulcanised according to the optimal time estimated at 170°C under 4 MPa, following the method described in Example 5.

### Example 12: Elastocaloric properties of the vulcanised natural rubber

The vulcanised natural rubber (vulcanised NR) was mechanically deformed at room temperature by means of a uniaxial traction test performed on a Zwick/Roell universal testing machine (Z005) equipped with a 5 kN force sensor. The crosshead speed during the loading and unloading phases was chosen to be equal to 3000 mm/min, which corresponds to a nominal strain rate of 2 × 10² min⁻¹ according to the dimensions of the specimen (15 mm in length). The rubber samples were stretched to 500% strain, followed by a relaxation phase in the strained stated for one minute. After the relaxation stage, the specimens were unloaded with the same nominal strain rate of 2 × 10² min⁻¹ to the relaxed state (zero force), followed by another relaxation for one more minute. The temperature field on the front face of the samples were recorded by means of an infrared chamber (InfraTech ImageIR^{®} 8800) equipped with a MCT detector with a temperature resolution at 30°C exceeding 0.035 K. FIG. 4 shows the temperature of the surface measured during the four phases of the test.

The temperature on the surface of the sample increases during the loading phase, particularly from 300% strain onwards, which is attributed to the capacity of the vulcanised natural rubber to undergo strain-induced crystallisation associated with heating of more than 4°C due to the exothermic character thereof (latent heat from phase transition). The temperature on the surface of the sample decreases gradually to room temperature after 1 minute of relaxation. Rapid unloading gives rise to cooling of more than 6°C with respect to room temperature. This is due to the melting of the crystalline phase previously formed during loading and is associated with an endothermic behaviour due to the latent heat from melting.

### Example 13: Elastocaloric properties of the vulcanised natural rubber/ground tyre rubber blends (vulcanised NR/GTR)

The vulcanised natural rubber/ground tyre rubber (vulcanised NR/GTR) blend the preparation of which was described in Example 6 and Example 7 were mechanically deformed at room temperature by means of uniaxial traction tests performed on the same universal testing machine described in Example 12. The loading phase performed until failure is associated with an increase of the temperature on the surface of the sample. The increase of temperature was greater as the amount of ground tyre rubber particles increases, and the increase of temperature measured right before failure shows a maximum of 6.6°C for the vulcanised NR/GTR33 blend. The increase of temperature with GTR particles is attributed to the strain being localised in the natural rubber matrix, due to the presence of reinforcement carbon black fillers in GTR particles, which gives rise to a nucleating effect in the strain-induced crystallisation, which occurs at a lower strain, and therefore favours the associated elastocaloric effect.

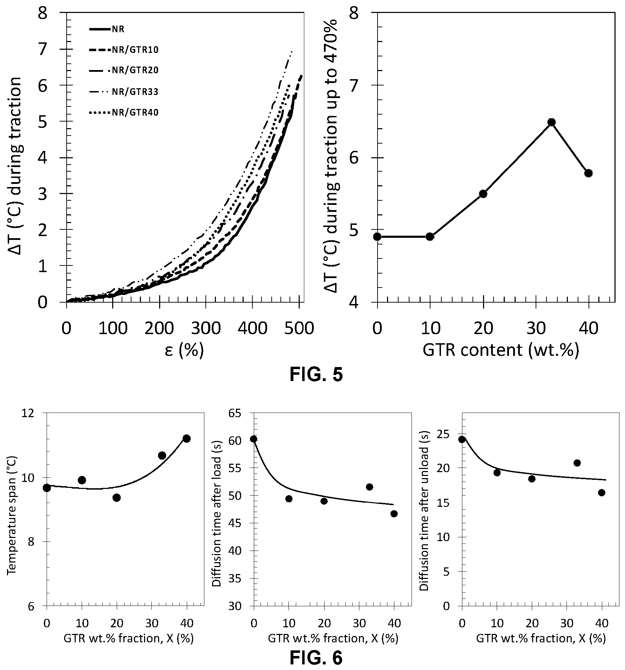

The vulcanised natural rubber/ground tyre rubber (vulcanised NR/GTR) blends were subjected to mechanical cycles. The temperature span is the maximum temperature difference measured between heating (loading) and cooling (unloading). The temperature span increases as the GTR content increases from 0 to 40% by weight. This is likely due to the heating/cooling capacity during the loading/cooling associated with the elastocaloric properties of theses blends, reinforced by the nucleating effect, as described above in FIG. 5.

The diffusion time is the time needed for the temperature on the surface of the sample to return to room temperature during the relaxation stage. Two cases are studied: (i) relaxation after a rapid loading and (ii) relaxation after a rapid unloading. In both cases, the thermal diffusion time is reduced in the presence of GTR, which is likely due to the greater thermal conductivity of the vulcanised NR/GTR blends compared to vulcanised NR blends, due to their carbon black particle content, as shown in FIG. 6.

### Example 14: Elastocaloric properties of vulcanised natural rubber/cellulose nanocrystals (vulcanised NR/CNC) blends

The vulcanised natural rubber/cellulose nanocrystal (vulcanised NR/CNC) blends the preparation of which was described in Example 8 and Example 9 were mechanically deformed at room temperature by means of uniaxial traction tests performed on the same universal testing machine described in Example 12. It was found that the maximum heating/cooling measured during loading/unloading increased from vulcanised NR to vulcanised NR/CNC1 blend, the temperature span of which is the maximum found for that blend, with a value of 11°C compared to 9.6°C for vulcanised NR. This increase is expected to be due to a nucleating effect of the CNCs on strain-induced crystallisation in the natural rubber matrix, from which the elastocaloric effect primarily originates (both for heating and for cooling). In fact, like in the case of GTR particles containing carbon black, CNCs are reinforcement fillers which localise strain in the rubber matrix, and therefore accelerate strain-induced crystallisation.

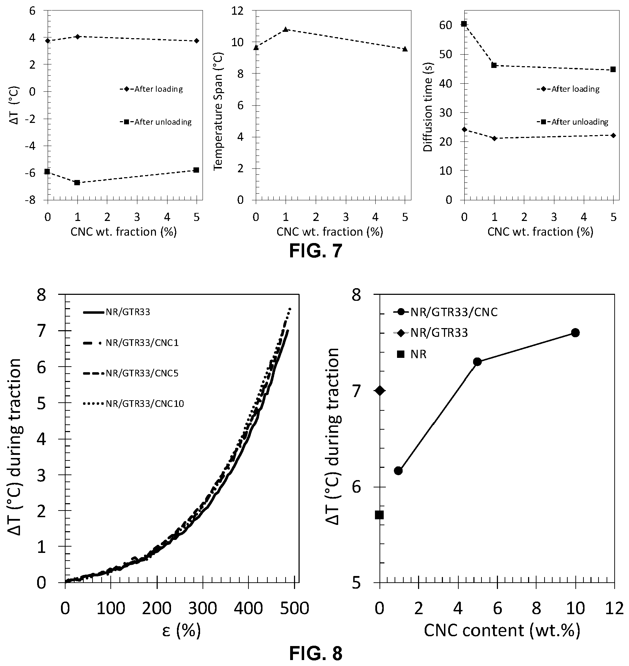

The thermal diffusion time decreases from 60 s to 45 s between vulcanised NR and vulcanised NR/CNC1 for relaxed samples in the strained state, and from 24 s to 20 s for relaxed samples in the unstrained state. Like in the case of GTR particles, this is expected to be due to the greater thermal conductivity of CNCs due to their crystalline nature, favouring heat transport. This effect can also be enhanced in the strained state, likely due to the orientation of the fibres along the stretching axis. No other significant effect is observed in both the temperature span and the diffusion time when the CNC content is increased from 1 to 5% by weight, which is likely due to an inefficient dispersion of CNCs in the NR matrix. Hereafter, the preparation of blends containing concomitantly GTR and CNC particles can be used to increase shear force during blending and to limit the possible undesired aggregation of CNC particles, as shown in FIG. 7.

### Example 15: Elastocaloric properties of the vulcanised natural rubber/ground tyre rubber/cellulose nanocrystal blends

The vulcanised natural rubber/ground tyre rubber/cellulose nanocrystals (NR/GTR/CNCs) the preparation of which was described in Example 10 and Example 11 was mechanically deformed at room temperature by means of uniaxial traction tests performed on the same universal testing machine described in Example 12. The increase of temperature during loading of the rubber samples is shown in FIG. 8. It is observed that the increase of temperature of the series of vulcanised NR/GTR33/CNC blend first decreases by adding 1% by weight of CNC (NR/GTR33/CNC1), but then increases with higher contents, reaching 7.6°C for a CNC content of 10% by weight. This suggests a synergistic effect of GTR and CNC particles on elastocaloric capacities during the phase of loading in the vulcanised NR/GTR/CNC blends compared to those of vulcanised NR/GTR blends. This can be attributed to the capacity of CNC nanoparticles to limit GTR agglomeration during the different phases for preparing the materials (blending and curing).

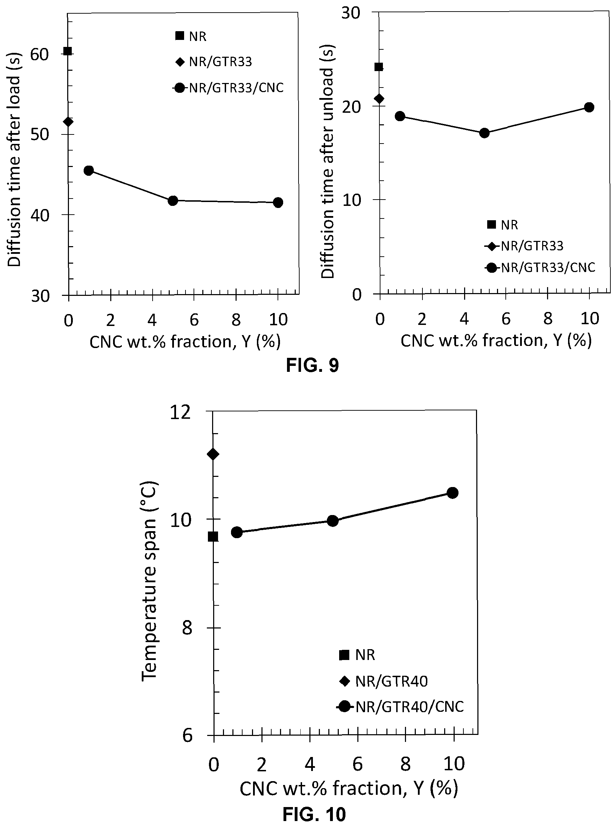

The thermal diffusion time after loading decreases constantly upon adding CNC to the vulcanised NR/GTR40 blend until reaching a minimum of 42 s for vulcanised NR/GTR40/CNC10 blend (FIG. 9). Like for heating during the loading phase, a synergistic effect on the reduction of thermal diffusion time in the strained state is observed. The same ratios as those set forth in FIG. 8 can be used. The impact of CNC on thermal diffusion is less evident in the unloaded state, since it is likely that the fibres are oriented randomly, so a specific direction of the thermal trajectory cannot be used to promote heat transport.

It has been proven that the temperature span combining heating and cooling capacities during loading and unloading, respectively, increases gradually in NR/GTR40/CNC blends when the CNC content is increased from 1 to 10% by weight until reaching a maximum value of about 10.5°C. This value is greater than that of vulcanised NR but is still less than that of the NR/GTR40 blend, as shown in FIG. 10.

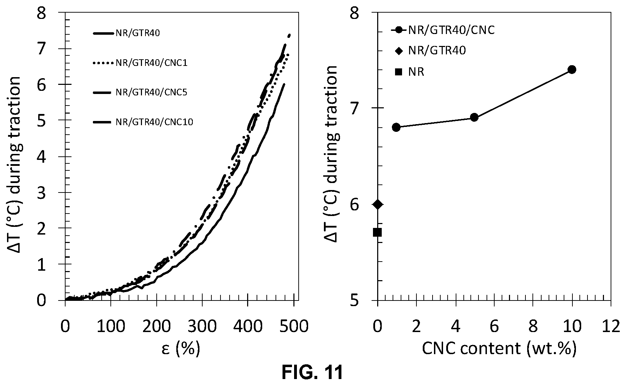

Individual tests until failure are performed in order to focus on the elastocaloric properties associated with heating in the same NR/GTR40/CNC blends (FIG. 11). Interestingly, it is found that the heating capacity in NR/GTR40/CNC blends increases significantly while 1 to 10% by weight of CNC is added, reaching a maximum of 7.4°C for vulcanised NR/GTR40/CNC10 compared to 6°C for vulcanised NR/GTR blend and 5.7°C for vulcanised NR. The large amount of waste rubber (GTR) particles is expected to increase shear forces during the blending stage, thereby favouring the spatial dispersion of the CNC. In turn, the fine dispersion of CNC particles can be used to prevent the reaggregation of GTR particles during the curing stage. These two mechanisms are expected to promote the dispersion of both GTR and CNC while they are used simultaneously, particularly when compared with NR/CNC or NR/GTR blend.

## Claims

1. A composition comprising a natural rubber, rubber waste, and cellulose nanocrystals blend wherein:
the rubber waste is ground tyre rubber; and
the natural rubber is in an amount of between 40% and 70% by weight with respect to the total composition, the rubber waste is in an amount of between 15% and 45% by weight with respect to the total composition and the cellulose nanocrystals are in an amount of between 0.1% and 20% by weight with respect to the total composition.

2. The composition according to claim 1, wherein the ground tyre rubber comprises a natural rubber, styrene-butadiene rubber, and carbon black blend.

3. The composition according to claim 2, wherein the natural rubber in the ground tyre rubber is in an amount of between 35% and 55% with respect to the total ground tyre rubber by weight, the styrene-butadiene rubber in the ground tyre rubber is in an amount of between 5% and 10% by weight with respect to the total weight of the ground tyre rubber, and/or the carbon black in the ground tyre rubber is in an amount of between 35% and 55% by weight with respect to the total weight of the ground tyre rubber.

4. The composition according to any one of the preceding claims, further comprising hydroxylamine.

5. The composition according to claim 4, wherein the hydroxylamine is in an amount of between 0.05% and 0.25% by weight with respect to the total weight of the composition, the natural rubber of the composition has a Mooney viscosity at 100°C of between 45 and 70, the natural rubber is in an amount of between 45% and 65% by weight with respect to the total weight of the composition, the rubber waste is in an amount of between 20% and 40% by weight with respect to the total weight of the composition and/or the cellulose nanocrystals are in an amount of between 1% and 15% by weight with respect to the total weight of the composition.

6. The composition according to any one of the preceding claims, wherein the cellulose nanocrystals comprise cellulose sulphate sodium salt.

7. A method for obtaining a composition according to any one of claims 1 to 6, which comprises:
a) masticating natural rubber in a mixer;
b) adding rubber waste and cellulose nanocrystal powder to the masticated natural rubber, obtaining a first blend;
c) adding a vulcanising agent to the first blend obtained in step b), obtaining a second blend;
d) vulcanising the second blend obtained in step c).

8. The method according to claim 7, wherein step a) is performed at a temperature of between 70°C and 130°C, for a time of between 1 and 10 minutes and/or under rotation of between 20 and 50 rpm.

9. The method according to claims 7 or 8, wherein step b) is performed for a time of between 1 and 10 minutes.

10. The method according to any one of claims 7 to 9, wherein step c) is performed for a time of between 1 and 10 minutes.

11. The method according to any one of claims 7 to 10, wherein step d) is performed at a temperature of between 150 and 200°C, and/or at a pressure of between 2 and 6 MPa.

12. The method according to any one of claims 7 to 11, wherein the vulcanising agent is dicumyl peroxide.

13. The method according to any one of claims 7 to 12, wherein the vulcanising agent is in an amount of between 0.5% and 3% by weight with respect to the total weight of the natural rubber of step a).

14. Use of the composition according to any one of claims 1 to 6 for heating or cooling buildings.

## Patentansprüche

1. Zusammensetzung umfassend eine Mischung aus Naturkautschuk, Kautschukabfall und Cellulosenanokristallen, wobei:
der Kautschukabfall gemahlener Reifenkautschuk ist; und
der Naturkautschuk in einer Menge zwischen 40 Gew.-% und 70 Gew.-% in Bezug auf die Gesamtzusammensetzung vorliegt, der Kautschukabfall in einer Menge zwischen 15 Gew.- % und 45 Gew.-% in Bezug auf die Gesamtzusammensetzung vorliegt und die Cellulosenanokristalle in einer Menge zwischen 0,1 Gew.-% und 20 Gew.-% in Bezug auf die Gesamtzusammensetzung vorliegen.

2. Zusammensetzung nach Anspruch 1, wobei der gemahlene Reifenkautschuk eine Mischung aus Naturkautschuk, Styrol-Butadien-Kautschuk und Ruß umfasst.

3. Zusammensetzung nach Anspruch 2, wobei der Naturkautschuk in dem gemahlenen Reifenkautschuk in einer Menge zwischen 35 % und 55 % in Bezug auf das Gesamtgewicht des gemahlenen Reifenkautschuks vorliegt, der Styrol-Butadien-Kautschuk in dem gemahlenen Reifenkautschuk in einer Menge zwischen 5 Gew.-% und 10 Gew.-% in Bezug auf das Gesamtgewicht des gemahlenen Reifenkautschuks vorliegt, und/oder der Ruß in dem gemahlenen Reifenkautschuk in einer Menge zwischen 35 Gew.-% und 55 Gew.-% in Bezug auf das Gesamtgewicht des gemahlenen Reifenkautschuks vorliegt.

4. Zusammensetzung nach einem der vorhergehenden Ansprüche, ferner Hydroxylamin umfassend.

5. Zusammensetzung nach Anspruch 4, wobei das Hydroxylamin in einer Menge zwischen 0,05 Gew.-% und 0.25 Gew.-% in Bezug auf das Gesamtgewicht der Zusammensetzung vorliegt, der Naturkautschuk der Zusammensetzung eine Mooney-Viskosität bei 100 °C zwischen 45 und 70 aufweist, der Naturkautschuk in einer Menge zwischen 45 Gew.-% und 65 Gew.-% in Bezug auf das Gesamtgewicht der Zusammensetzung vorliegt, der Kautschukabfall in einer Menge zwischen 20 Gew.-% und 40 Gew.-% in Bezug auf das Gesamtgewicht der Zusammensetzung vorliegt und/oder die Cellulosenanokristalle in einer Menge zwischen 1 Gew.-% und 15 Gew.-% in Bezug auf das Gesamtgewicht der Zusammensetzung vorliegen.

6. Zusammensetzung nach einem der vorhergehenden Ansprüche, wobei die Cellulosenanokristalle Cellulosesulfat-Natriumsalz umfassen.

7. Verfahren zum Erhalten einer Zusammensetzung nach einem der Ansprüche 1 bis 6, welches Folgendes umfasst:
a) Kneten von Naturkautschuk in einem Mischer;
b) Hinzufügen von Kautschukabfall und Cellulosenanokristallpulver zu dem gekneteten Naturkautschuk, wobei eine erste Mischung erhalten wird;
c) Hinzufügen eines Vulkanisierungsmittels zu der in Schritt b) erhaltenen ersten Mischung, wobei eine zweite Mischung erhalten wird;
d) Vulkanisieren der in Schritt c) erhaltenen zweiten Mischung.

8. Verfahren nach Anspruch 7, wobei Schritt a) bei einer Temperatur zwischen 70 °C und 130 °C, für eine Zeit zwischen 1 und 10 Minuten und/oder unter Rotation zwischen 20 und 50 U/min durchgeführt wird.

9. Verfahren nach Anspruch 7 oder 8, wobei Schritt b) für eine Zeit zwischen 1 und 10 Minuten durchgeführt wird.

10. Verfahren nach einem der Ansprüche 7 bis 9, wobei Schritt c) für eine Zeit zwischen 1 und 10 Minuten durchgeführt wird.

11. Verfahren nach einem der Ansprüche 7 bis 10, wobei der Schritt d) bei einer Temperatur zwischen 150 und 200 °C und/oder bei einem Druck zwischen 2 und 6 MPa durchgeführt wird.

12. Verfahren nach einem der Ansprüche 7 bis 11, wobei das Vulkanisierungsmittel Dicumylperoxid ist.

13. Verfahren nach einem der Ansprüche 7 bis 12, wobei das Vulkanisierungsmittel in einer Menge zwischen 0,5 Gew.-% und 3 Gew.-% in Bezug auf das Gesamtgewicht des Naturkautschuks aus Schritt a) vorliegt.

14. Verwendung der Zusammensetzung nach einem der Ansprüche 1 bis 6 zum Heizen oder Kühlen von Gebäuden.

## Revendications

1. Composition comprenant une combinaison de caoutchouc naturel, déchets de caoutchouc et nanocristaux de cellulose, dans laquelle :
les déchets de caoutchouc sont du caoutchouc de pneu broyé ; et
le caoutchouc naturel se trouve dans une quantité comprise entre 40% et 70% en poids par rapport à la composition totale, les déchets de caoutchouc se trouvent dans une quantité comprise entre 15% et 45% en poids par rapport à la composition totale et les nanocristaux de cellulose se trouvent dans une quantité comprise entre 0,1% et 20% en poids par rapport à la composition totale.

2. Composition selon la revendication 1, dans laquelle le caoutchouc de pneu broyé comprend une combinaison de caoutchouc naturel, caoutchouc de styrène-butadiène et noir de carbone.

3. Composition selon la revendication 2, dans laquelle le caoutchouc naturel dans le caoutchouc de pneu broyé se trouve dans une quantité comprise entre 35% et 55% en poids par rapport au caoutchouc de pneu broyé total, le caoutchouc de styrène-butadiène dans le caoutchouc de pneu broyé se trouve dans une quantité comprise entre 5% et 10% en poids par rapport au poids total du caoutchouc de pneu broyé, et/ou le noir de carbone dans le caoutchouc de pneu broyé se trouve dans une quantité comprise entre 35% et 55% en poids par rapport au poids total du caoutchouc de pneu broyé.

4. Composition selon l'une quelconque des revendications précédentes, comprenant en outre de l'hydroxylamine.

5. Composition selon la revendication 4, dans laquelle l'hydroxylamine se trouve dans une quantité comprise entre 0,05% et 0,25% en poids par rapport au poids total de la composition, le caoutchouc naturel de la composition présente une viscosité Mooney à 100°C comprise entre 45 et 70, le caoutchouc naturel se trouve dans une quantité comprise entre 45% et 65% en poids par rapport au poids total de la composition, les déchets de caoutchouc se trouvent dans une quantité comprise entre 20% et 40% en poids par rapport au poids total de la composition et/ou les nanocristaux de cellulose se trouvent dans une quantité comprise entre 1% et 15% en poids par rapport au poids total de la composition.

6. Composition selon l'une quelconque des revendications précédentes, dans laquelle les nanocristaux de cellulose comprennent du sel sodique de sulfate de cellulose.

7. Procédé d'obtention d'une composition selon l'une quelconque des revendications 1 à 6, qui comprend :
a) la mastication de caoutchouc naturel dans un mélangeur ;
b) l'ajout de déchets de caoutchouc et de nanocristaux de cellulose en poudre au caoutchouc naturel mastiqué, en obtenant une première combinaison ;
c) l'ajout d'un agent de vulcanisation à la première combinaison obtenue dans l'étape b), en obtenant une deuxième combinaison ;
d) la vulcanisation de la deuxième combinaison obtenue dans l'étape c).

8. Procédé selon la revendication 7, dans lequel l'étape a) est réalisée à une température comprise entre 70°C et 130°C, pendant une durée comprise entre 1 et 10 minutes et/ou avec une rotation comprise entre 20 et 50 rpm.

9. Procédé selon les revendications 7 ou 8, dans lequel l'étape b) est réalisée pendant une durée comprise entre 1 et 10 minutes.

10. Procédé selon l'une quelconque des revendications 7 à 9, dans lequel l'étape c) est réalisée pendant une durée comprise entre 1 et 10 minutes.

11. Procédé selon l'une quelconque des revendications 7 à 10, dans lequel l'étape d) est réalisée à une température comprise entre 150 et 200°C, et/ou sous une pression comprise entre 2 et 6 MPa.

12. Procédé selon l'une quelconque des revendications 7 à 11, dans lequel l'agent de vulcanisation est du peroxyde de dicumyle.

13. Procédé selon l'une quelconque des revendications 7 à 12, dans lequel l'agent de vulcanisation se trouve dans une quantité comprise entre 0,5% et 3% en poids par rapport au poids total du caoutchouc naturel de l'étape a).

14. Utilisation de la composition selon l'une quelconque des revendications 1 à 6, pour le chauffage ou le refroidissement de bâtiments.
